# EUROPEAN PATENT SPECIFICATION

(11) **EP 1 378 408 B1**
(45) Date of publication and mention of the grant of the patent: **04.05.2011**
(21) Application number: 03076920.2
(22) Date of filing: 19.06.2003
(51) Int. Cl.: B60T 1/087, F16D 57/04

(54) **Hydrodynamic brake**
Hydrodynamische Bremse
Frein hydrodynamique

(30) Priority: 03.07.2002 SV 202082
(43) Date of publication of application: 07.01.2004
(73) Proprietor: Scania CV AB, 151 87 Södertälje (SE)
(72) Inventor: Jönsson, Hans, 151 47 Södertälje (SV)

(56) References cited:
- WO-A-02/04834
- GB-A- 1 326 500
- US-A- 3 352 385

## Description

### BACKGROUND TO THE INVENTION, AND STATE OF THE ART

The invention relates to a hydrodynamic brake according to the preamble of claim 1.

The use of hydrodynamic brakes such as retarders always subjects the vehicle to a certain braking action, which may be described as a no-load loss, when the brake is not activated. Such a no-load loss occurs because the brake's rotor, which rotates with a powered shaft of the vehicle, causes circulation of the air present in the toroidal space of the hydrodynamic brake. In a similar manner to oil, the circulating air exerts a braking action on the rotor and hence on the vehicle. Although the density of air is only a fraction of that of oil, the resulting braking action is not entirely negligible. The fuel consumption of a vehicle with a retarder will therefore often be unnecessarily high.

A large number of different solutions have been proposed for decreasing the no-load loss and reducing the circulation of air in the toroidal space. WO 02/04834 refers to a hydrodynamic brake in which the no-load losses are reduced by a multiplicity of injection devices injecting jets of oil at high pressure in a direction contrary to the air circulating in the toroidal space. The injected oil reduces the velocity of the circulating air. The injected oil thereafter forms an oil mist which further counteracts the air circulation in the toroidal space.

In hydrodynamic brakes which incorporate oil injection to reduce the no-load losses, the drops in the oil mist gradually come into contact with the surfaces of the stator and rotor before the oil is led out from the toroidal space via the peripheral slitlike passage between the stator and the rotor. This oil flows out onto a cylindrical surface which stretches peripherally round the slitlike passage. The cylindrical surface incorporates an outlet with a passage which leads the oil back to an oil sump. Usually, the oil is not always led out through the outlet sufficiently quickly and may build up along the cylindrical surface in a region externally about the rotor and the stator. Such oil build-up hinders inter alia the rotor's rotation movement and thereby reduces the effectiveness of the method described for reducing the no-load losses.

### SUMMARY OF THE INVENTION

The object of the present invention is to provide a hydrodynamic brake so designed as to allow rapid and effective transfer of a second medium, which is supplied in order to reduce the no-load losses, away from a region adjacent to the stator and the rotor. The adverse effects with such a build-up of the second medium in this region would have on the no-load losses are thereby prevented.

This object is achieved with the hydrodynamic brake of the kind mentioned in the introduction which is characterised by the features indicated in the characterising part of claim 1. The groove thus incorporates a countersunk surface. Such a countersunk surface may be arranged in a conventional smooth cylindrical surface which extends peripherally round the stator and rotor. A countersunk surface ensures that the flowing second medium is retained in the groove. The rotor of a hydrodynamic brake usually has a very high peripheral velocity. This means that a relatively high velocity component in the rotor's direction of rotation is imparted to the second medium when it is expelled from the toroidal space via the slitlike passage. This velocity component results in the imparting to the second medium of a correspondingly high velocity in the radially externally situated groove. The externally situated groove exhibits with advantage a curved and substantially closed shape so that it may extend round the whole of the slitlike passage. In such cases the groove may have a substantially circular shape. This means that the second medium flowing at a relatively high velocity in the curved groove will be pressed radially outwards against the peripheral surface of the groove by centrifugal force. When the second medium reaches the outlet in the peripheral surface of the groove, it will be pushed radially outwards and out through the outlet. The second medium reaches the outlet and is expelled from the groove after flowing for less than one revolution. This ensures that the second medium leaves the region situated about the rotor and stator very quickly. Build-up of the second medium in this region of the hydrodynamic brake is thereby prevented and any no-load loss of the brake due to said build-up of the second medium is thereby eliminated.

According to a preferred embodiment of the present invention, said groove has a width which exceeds the width of the slitlike passage, thereby ensuring that substantially all of the second medium which leaves the toroidal space via the slitlike passage is caught in the groove. The groove may have a width of about 10 mm, which clearly exceeds the width of the slitlike passage. Such a groove width and a groove depth of at least 2 mm guarantee that the second medium will not leave the groove or that the groove will not be completely filled by the second medium. With advantage, said outlet has a width which substantially corresponds to the width of the groove, therefore ensuring that none of the second medium will flow past the outlet and that substantially all of the second medium will be led out through the outlet after flowing in the groove for less than one revolution.

According to another preferred embodiment of the present invention the outlet defines the opening of a substantially open vessel. This means that the second medium can be gathered and stored in the substantially open vessel for a short period at a distance from the rotor and the stator. The open vessel is positioned with the opening facing upwards so that the second medium is retained in the vessel by its own weight. The open vessel preferably incorporates an orifice to a passage which allows transfer of the second medium to a storage container. In such cases the size of the orifice and its position in the open vessel are such that the second medium is relatively quickly led away from the open vessel so that there is no risk of the latter becoming completely full.

According to another preferred embodiment of the present invention, the groove incorporates a first portion with a peripheral surface situated at a substantially constant distance from the slitlike passage. Such a first portion may constitute the major part of the groove and represent 60-90% of the total extent of the groove. The groove may preferably have a depth of between 1 and 3 mm relative to the surface which is adjacent to the countersunk groove. With advantage, the peripheral surface of the groove immediately before the outlet is situated at a greater distance from the slitlike passage than the remainder of the peripheral surface of the groove. Such a difference in level ensures that the second medium will not run across the outlet. As the amount of the second medium in the groove gradually increases towards the outlet, a greater depth of groove adjacent to the outlet may also be necessary to prevent any overflow. With advantage, the groove incorporates a second portion with a peripheral surface which exhibits a gradually increasing distance from the slitlike passage in the direction of flow of the second medium towards the outlet. The second medium is thus led in a well-defined path gradually radially outwards before it reaches the outlet. Such a groove incorporates no sharp bends or sharp curves which might result in the second medium being guided or splashed up out of the groove. Such a second portion may represent 10-40% of the total extent of the groove. The groove preferably incorporates a third portion situated immediately after the outlet in the direction of flow of the second medium and incorporating a peripheral surface situated at a smaller distance from the slitlike passage than the remainder of the surface of the groove. The result is a further wall surface of the outlet which effectively prevents the second medium from running across the outlet to the opposite side of the groove. This means that the outlet need not have a particularly long extent in the direction of flow of the second medium in order to ensure that substantially all of the medium is led out through the outlet.

According to another preferred embodiment of the present invention, the second medium is identical with the first medium, in which case the same medium is used for imparting a braking action as for reducing the no-load losses. Such a medium is with advantage a suitable oil. In this case the passage from the vessel's orifice to the storage container may be substantially identical with an existing passage for allowing quick emptying of the toroidal space. In this case the oil is led into and gathered in a storage container which may be an oil sump.

### BRIEF DESCRIPTION OF THE DRAWINGS

A preferred embodiment of the invention is described below by way of example with reference to the attached drawings, in which:
- Fig. 1: depicts a hydrodynamic brake with a groove according to the present invention and
- Fig. 2: depicts a section along the line A-A in Fig. 1.

### DETAILED DESCRIPTION OF A PREFERRED EMBODIMENT OF THE INVENTION

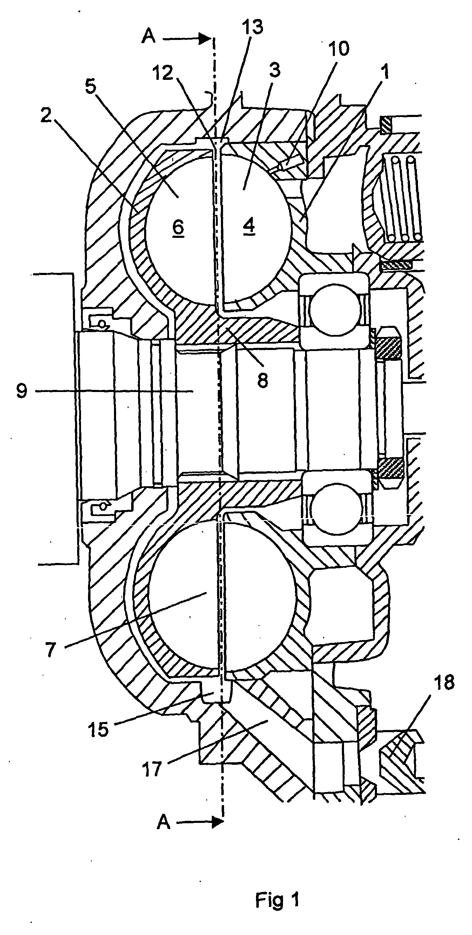

Fig. 1 depicts a hydrodynamic brake in the form of a retarder of a powered vehicle. The retarder comprises a stator 1 and a rotor 2. The stator 1 has an annular shell 3 with a multiplicity of blades 4 arranged at equal spacing along the annular shell 3. The rotor 2 is of corresponding design with an annular shell 5 which incorporates a multiplicity of blades 6 arranged at equal spacing along the annular shell 5. The respective shells 3, 5 of the stator 1 and rotor 2 are coaxially arranged with respect to one another so that they together form a toroidal space 7. The stator 1 is arranged firmly on a stationary surface of the vehicle. The rotor 2 incorporates a shaft portion 8 which is connected firmly to a rotatable shaft 9. The rotatable shaft 9 is itself connected to a suitable driveshaft of the vehicle's driveline. The rotor 2 will thus rotate with the vehicle's driveline.

To exert a braking action on the vehicle, a medium in the form of an oil is intended, upon activation of the brake, to be supplied to the toroidal space 7 via a multiplicity of apertures (not depicted here) in the stator 1. During the braking process, the kinetic energy of the oil converts to thermal energy in the toroidal space 7. The oil is intended to be carried away from the toroidal space 7 via a multiplicity of apertures which are not depicted here. This is conventional technology in connection with braking by means of a retarder and is therefore described in no more detail here.

In a manner similar to the way in which an oil-filled toroidal space 7 exerts a braking action on the rotor 2, the air present in the toroidal space 7 exerts, when the brake is not activated, a braking action on the rotor 2 and hence on the vehicle's driveline.
Such undesired braking action may be described as a no-load loss. As air has a far lower density than oil, the braking action exerted by the air will be considerably smaller than that exerted by the oil, but the braking action exerted by the air is not entirely negligible and does lead, e.g. during operation of a motor vehicle, to unnecessarily high fuel consumption.

To counteract such air circulation in the toroidal space 7, an injection means 10 is arranged at an upper portion of the stator 1. The injection means 10 is intended, when the brake is not activated, to inject a second medium which in this case is identical with the oil used for effecting a braking action in the retarder. The injection means 10 supplies the oil in the form of one or more jets at high pressure so that a high initial velocity is imparted to the oil. The jets of oil meet the circulating air flow at an appropriate angle so that the air flow in the toroidal space 7 is counteracted. The injected oil from the injection means 10 counteracts the movement of air from the rotor 2 to the stator 1. Thereafter the injected oil forms in the toroidal space 7 an oil mist which also counteracts the air flow in the toroidal space 7. The oil drops formed in the oil mist gradually come into contact with the surfaces of the stator 1 and rotor 2, followed by the oil being led out from the toroidal space 7 via a circular slitlike aperture 12 between the peripheral parts of the stator 1 and rotor 2. The rotor 2 of a retarder has a high peripheral velocity which may be about 40 m/s. This means that a relatively high velocity component in the direction of rotation of the rotor 2 is imparted to the oil when it is expelled via the slitlike passage 12. The oil leaving the slitlike passage 12 is caught in a substantially circular groove 13 with a countersunk surface which extends peripherally round the slitlike passage 12. The oil caught assumes a corresponding direction of flow in the peripherally arranged groove 13 and a high velocity. The groove 13 has a width of about 10 mm, which clearly exceeds the width of the slitlike passage 12, thereby ensuring that all of the oil leaving the toroidal space 7 via the slitlike passage 12 is caught in the groove 13.

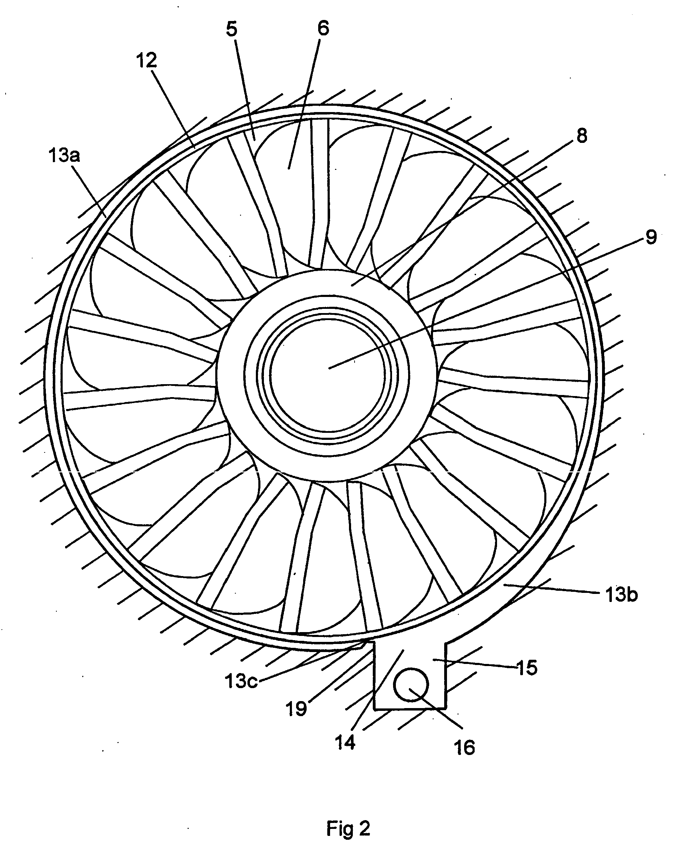

Fig. 2 depicts a section along the line A-A in Fig. 1 as seen from the right in the drawing. The section A-A extends through the groove 13. Fig. 2 shows the annular shell 5 of the rotor 2 incorporating a multiplicity of blades 6 arranged at equal spacing along the annular shell 5. The groove 13 comprises a first portion 13a with a peripheral surface situated at a substantially constant distance from the slitlike passage 12 between the stator 1 and the rotor 2. The peripheral surface of the groove 13 has in this case a depth of about 2 mm relative to adjacent surfaces which surround the stator 1 and rotor 2. The first portion 13a of the groove 13 represents here about 80% of the total extent of the groove 13. The groove 13 comprises a second portion 13b with a peripheral surface situated at a continuously increasing distance from the slitlike passage 12 in the direction of flow of the oil to an outlet 14 in the peripheral surface. The groove's second portion 13b represents here about 20% of the total extent of the groove 13. The outlet 14 defines the opening of a substantially open vessel 15 which is positioned so that the oil caught is retained in the vessel 15 by the force of gravity. The opening of the vessel 15 therefore faces upwards. The open vessel 15 incorporates an orifice 16 which communicates with a passage 17 which allows transfer of the oil to an oil sump. A settable valve 18 is arranged in the passage 17. The valve 18 is designed to be set in an open position when the oil intended to reduce the air circulation in the toroidal space 7 is to be led via the passage 17 to an oil sump which is conventional and is therefore not depicted in the drawings.

The rotor 2 of the hydrodynamic brake rotates even when no exerting of a braking action is desired. This means that a circulating movement of the rotor 2 is imparted to air present in the toroidal space 7. The circulating air exerts a not entirely negligible braking action on the rotor 2 and hence on the vehicle's driveline. Such undesired braking action of the retarder may be described as a no-load loss. To reduce this no-load loss, the injection means 10 is activated so that a jet of oil is injected at high pressure at an optimum angle relative to the air flow in the toroidal space 7. The air flow is thus braked and the jet of oil divides to form an oil mist which further counteracts the air flow in the toroidal space 7. The oil drops formed in the oil mist gradually come into contact with the surfaces of the stator 1 and rotor 2, followed by the oil being led out from the toroidal space 7 via the slitlike aperture 12 between the peripheral parts of the stator 1 and rotor 2. In this situation not only a radial movement outwards but also a velocity component in the direction of rotation of the rotor 2 are imparted to the oil. The oil caught in the groove 13 thus assumes a direction of flow which corresponds to the direction of rotation of the rotor 2. The oil leaves the slitlike passage 12 between the peripheral parts of the stator 1 and rotor 2 with a substantially uniform distribution and is thus caught, likewise with a substantially uniform distribution, along the radially external extent of the groove 13. The greater part of the oil thus initially reaches the first portion 13a of the groove 13 which has the longest extent. The oil caught in the first portion 13a thereafter flows clockwise (in Fig. 2) along the peripheral surface of the first portion 13a, which peripheral surface is situated at a substantially constant distance from the slitlike passage 12. When the oil reaches the second portion 13b of the groove 13, the oil is gradually led radially outwards by the peripheral surface of the second portion 13b, which peripheral surface is situated at a continuously increasing distance from the slitlike passage 12 in the direction of flow of the oil towards the outlet 14. A thus gradually increasing depth of the groove 13 obviates sharp bends in the direction of flow which might otherwise lead to oil splashing out from the groove 13. The peripheral surface of the second portion 13b is thus situated at a greatest distance from the slitlike passage 12 immediately before the oil reaches the outlet 14. The oil is thus supplied at a relatively low level to the open vessel 15. The outlet 14 has a width which extends across the whole width of the groove 13 so that none of the oil in the groove 13 can run past the outlet 14. The oil flowing at high velocity in the groove 13 is pushed by centrifugal force radially outwards and out through the outlet 14. Situating the outlet 14 at a low portion of the groove 13 means that the force of gravity also contributes to the oil being led down into and being retained in the substantially open vessel 15.

The groove 13 comprises on the opposite side of the opening a third portion 13c with a peripheral surface which is situated at a smaller distance from the slitlike passage 12 than the remainder of the peripheral surface of the groove 13. The third portion 13c represents only a fraction of the total extent of the groove 13. The third portion 13c forms a wall surface 19 which effectively prevents any oil splashed upwards from the open vessel 15 reaching the opposite side of the groove 13. The design described above of the groove 13 ensures that the oil will be carried in the groove 13 for less than one revolution before it is led out through the outlet 14. The oil gathered in the open vessel 15 is led via the orifice 16 and the passage 17 to the oil sump for storage.

The groove 13 described above thus leads the oil very quickly away from the region externally about the rotor 2. The oil is thus prevented from building up externally around the rotor 2 and affecting inter alia the rotation movement of the rotor 2. With the groove 13 described above and the outlet 14, the method of injecting oil into the toroidal space 7 in order to reduce the no-load losses becomes very effective.

The invention is in no way limited to the embodiment described and may be varied freely within the scopes of the claims. For example, the groove may have substantially any functional shape desired. It is also possible to arrange two or more openings in the peripheral surface of the groove 13. The second medium need not necessarily be identical with the oil used for exerting a braking action via the retarder.

## Claims

1. A hydrodynamic brake comprising a stator (1) which has an annular shell (3) with a multiplicity of blades (4), a rotor (2) which has a corresponding annular shell (5) with a multiplicity of blades (6), which annular shells (3, 5) of the rotor (2) and stator (1) are so arranged that they form a toroidal space (7), a first medium intended to be supplied to the toroidal space (7) upon activation of the brake in order to exert a braking action, and a second medium intended to be supplied to the toroidal space (7) when the brake is not activated, in order to reduce an undesired braking action which is due to circulation of air present in the toroidal space (7), said first medium intended to be led out from the toroidal space (7), after use, via a multiplicity of apertures said second medium being intended to be led out from the toroidal space (7), after use, via a peripheral slitlike passage (12) situated between the stator (1) and the rotor (2), **characterised in that** the hydrodynamic brake incorporates a peripheral groove (13) with a countersunk surface situated radially externally about said slitlike passage (12) and shaped so that it extends at least substantially round the whole of said peripheral slitlike passage (12), said second medium being intended to be led out from the toroidal space (7) radially outwards to said peripheral groove (13) via said slitlike passage (12) along substantially the whole length of said slitlike passage (12) and that the peripheral surface of said groove (13) incorporates at least an outlet (14) for the second medium.

2. A hydrodynamic brake according to claim 1, **characterised in that** said groove (13) has a width which exceeds the width of the slitlike passage (12).

3. A hydrodynamic brake according to claim 1 or 2, **characterised in that** said outlet (14) has a width which substantially corresponds to the width of the groove (13).

4. A hydrodynamic brake according to any one of the foregoing claims, **characterised in that** the outlet (14) defines the opening of a substantially open vessel (15).

5. A hydrodynamic brake according to claim 4, **characterised in that** the open vessel (15) incorporates an orifice (16) to a passage (17) which allows transfer of the second medium to a storage space.

6. A hydrodynamic brake according to any one of the foregoing claims, **characterised in that** the groove (13) comprises a first portion (13 a) with a peripheral surface situated at a substantially constant distance from the slitlike passage (12).

7. A hydrodynamic brake according to any one of the foregoing claims, **characterised in that** the peripheral surface of the groove (13) immediately before the outlet (14) in the direction of flow of the second medium is situated at a greater distance from the slitlike passage (12) than the remainder of the peripheral surface of the groove (13).

8. A hydrodynamic brake according to claim 7, **characterised in that** the groove (13) comprises a second portion (13b) with a peripheral surface situated at a gradually increasing distance from the slitlike passage (12) in the direction of flow of the second medium to the outlet (14).

9. A hydrodynamic brake according to any one of the foregoing claims, **characterised in that** the groove (13) comprises a third portion (13c) situated immediately after the outlet (14) in the direction of flow of the second medium and incorporating a peripheral surface which is situated at a smaller distance from the slitlike passage (12) than the remainder of the peripheral surface of the groove (13).

10. A hydrodynamic brake according to any one of the foregoing claims, **characterised in that** the second medium is identical with the first medium.

## Patentansprüche

1. Hydrodynamische Bremse, umfassend einen Stator (1), der ein ringförmiges Gehäuse (3) mit einer Mehrzahl von Schaufeln (4) aufweist, einen Rotor (2), der ein entsprechendes ringförmiges Gehäuse (5) mit einer Mehrzahl von Schaufeln (6) aufweist, wobei die ringförmigen Gehäuse (3, 5) des Rotors (2) und des Stators (1) so angeordnet sind, dass sie einen toroidförmigen Raum (7) bilden, ein erstes Medium, welches dazu vorgesehen ist, dem toroidförmigen Raum (7) zum Ausüben einer Bremswirkung bei einer Betätigung der Bremse zugeführt zu werden, und ein zweites Medium, welches dazu vorgesehen Ist, dem toroidförmigen Raum (7) zugeführt zu werden, wenn die Bremse nicht aktiviert ist, um eine ungewünschte Bremswirkung aufgrund der Zirkulation von Luft, die sich in dem toroidförmigen Raum (7) befindet, zu reduzieren, wobei das erste Medium dazu vorgesehen Ist, nach Verwendung aus dem toroidförmigen Raum (7) über eine Mehrzahl von Öffnungen herausgeführt zu werden, wobei das zweite Medium dazu vorgesehen Ist, nach Verwendung aus dem toroidförmigen Raum (7) über einen spaltartigen Umfangskanal (12) herausgeführt zu werden, der zwischen dem Stator (1) und dem Rotor (2) vorgesehen ist,
**dadurch gekennzeichnet, dass** die hydrodynamische Bremse eine umlaufende Fuge (13) mit einer abgesenkten Fläche aufweist, die sich radial außerhalb um den spaltähnlichen Kanal (12) herum erstreckt und so geformt ist, dass sie sich Im Wesentlichen um den gesamten spaltartigen, umlaufenden Kanal (12) erstreckt, wobei das zweite Medium dazu vorgesehen ist, aus dem toroidförmigen Raum (7) radial nach außen zu der umlaufenden Fuge (13) über den spaltartigen Kanal (12) im Wesentlichen entlang der gesamten Länge des spaltartigen Kanals (12) herausgeführt zu werden, und dass die umlaufende Fläche der Fuge (13) wenigstens einen Auslass (14) für das zweite Medium aufweist.

2. Hydrodynamische Bremse nach Anspruch 1,
**dadurch gekennzeichnet, dass** die Fuge (13) eine Breite aufweist, welche die Breite des spaltartlgen Kanals (12) übertrifft.

3. Hydrodynamische Bremse nach Anspruch 1 oder 2,
**dadurch gekennzeichnet, dass** der Auslass (14) eine Breite aufweist, welche im Wesentlichen der Breite der Fuge (13) entspricht.

4. Hydrodynamische Bremse nach einem der vorhergehenden Ansprüche,
**dadurch gekennzeichnet, dass** der Auslass (14) die Öffnung eines im Wesentlichen offenen Behälters (15) definiert.

5. Hydrodynamische Bremse nach Anspruch 4,
**dadurch gekennzeichnet, dass** der offene Behälter (15) eine Öffnung (16) zu einem Kanal (17) aufweist, welche den Transfer des zweiten Mediums zu einem Speicherraum ermöglicht.

6. Hydrodynamische Bremse nach einem der vorhergehenden Ansprüche,
**dadurch gekennzeichnet, dass** die Fuge (13) einen ersten Bereich (13a) mit einer umlaufenden Fläche aufweist, die sich in einer im Wesentlichen konstanten Entfernung von dem spaltartigen Kanal (12) befindet.

7. Hydrodynamische Bremse nach einem der vorhergehenden Ansprüche,
**dadurch gekennzeichnet, dass** sich die umlaufende Fläche der Fuge (13) direkt vor dem Auslass (14) in der Durchflussrichtung des zweiten Mediums in einer größeren Entfernung von dem spaltartigen Kanal (12) befindet, als der Rest der umlaufenden Fläche der Fuge (13).

8. Hydrodynamische Bremse nach Anspruch 7,
**dadurch gekennzeichnet, dass** die Fuge (13) einen zweiten Bereich (13b) mit einer umlaufenden Fläche aufweist, die sich in einer fortschreitend zunehmenden Entfernung von dem spaltartigen Kanal (12) In der Durchflussrichtung des zweiten Mediums zu dem Auslass (14) befindet.

9. Hydrodynamische Bremse nach einem der vorhergehenden Ansprüche,
**dadurch gekennzeichnet, dass** die Fuge (13) einen dritten Bereich (13c) aufweist, der sich direkt nach dem Auslass (14) in der Durchflussrichtung des zweiten Mediums befindet, und eine umlaufenden Fläche aufweist, welche sich in einer geringeren Entfernung von dem spaltartigen Kanal (12) als der Rest der umlaufenden Fläche der Fuge (13) befindet.

10. Hydrodynamische Bremse nach einem der vorhergehenden Ansprüche,
**dadurch gekennzeichnet, dass** das zweite Medium identisch mit dem ersten Medium ist.

## Revendications

1. Frein hydrodynamique comprenant un stator (1) qui a une coquille annulaire (3) dotée d'une multiplicité d'aubes (4), un rotor (2) qui a une coquille annulaire correspondante (5) dotée d'une multiplicité d'aubes (6), lesquelles coquilles annulaires (3, 5) du rotor (2) et du stator (1) sont disposées de telle manière qu'elles forment un espace toroïdal (7), un premier milieu destiné à être acheminé à l'espace toroïdal (7) lors de l'activation du frein pour exercer une action de freinage, et un second milieu destiné à être acheminé à l'espace toroïdal (7), lorsque le frein n'est pas activé, afin de réduire une action de freinage indésirable qui serait due à la circulation d'air présent dans l'espace toroïdal (7), ledit premier milieu étant destiné à être éjecté de l'espace toroïdal (7) après utilisation à travers une multiplicité d'ouvertures, ledit second milieu étant destiné à être éjecté de l'espace toroïdal (7) après utilisation à travers un passage périphérique en forme de fente (12) situé entre le stator (1) et le rotor (2), **caractérisé en ce que** le frein hydrodynamique comporte une gorge périphérique (13) présentant une surface fraisée située radialement à l'extérieur autour dudit passage en forme de fente (12) et conformée de manière qu'elle s'étende au moins sensiblement sur tout le tour dudit passage périphérique en forme de fente (12), ledit second milieu étant destiné à être éjecté de l'espace toroïdal (7), radialement vers l'extérieur et dans ladite gorge périphérique (13), à travers ledit passage en forme de fente (12) sensiblement sur toute la longueur dudit passage en forme de fente (12), et **en ce que** la surface périphérique de ladite gorge (13) comporte au moins une sortie (14) pour le second milieu.

2. Frein hydrodynamique selon la revendication 1, **caractérisé en ce que** ladite gorge (13) a une largeur qui excède la largeur dudit passage en forme de fente (12).

3. Frein hydrodynamique selon la revendication 1 ou 2, **caractérisé en ce que** ladite sortie (14) a une largeur qui correspond sensiblement à la largeur de la gorge (13).

4. Frein hydrodynamique selon une quelconque des revendications précédentes, **caractérisé en ce que** la sortie (14) définit l'ouverture d'un récipient sensiblement ouvert (15).

5. Frein hydrodynamique selon la revendication 4, **caractérisé en ce que** le récipient ouvert (15) présente un orifice (16) donnant sur un passage (17) qui permet de transférer le second milieu à un espace de stockage.

6. Frein hydrodynamique selon une quelconque des revendications précédentes, **caractérisé en ce que** la gorge (13) comprend une première partie (13a) qui présente une surface périphérique située à une distance sensiblement constante du passage en forme de fente (12).

7. Frein hydrodynamique selon une quelconque des revendications précédentes, **caractérisé en ce que**, immédiatement avant la sortie (14), dans le sens de l'écoulement du second milieu, la surface périphérique de la gorge (13) est située à une plus grande distance du passage en forme de fente (12) que le reste de la surface périphérique de la gorge (13).

8. Frein hydrodynamique selon la revendication 7, **caractérisé en ce que** la gorge comprend une deuxième partie (13b) qui présente une surface périphérique située à une distance progressivement croissante du passage en forme de fente (12) dans le sens de l'écoulement du second milieu en direction de la sortie (14).

9. Frein hydrodynamique selon une quelconque des revendications précédentes, **caractérisé en ce que** la gorge comprend une troisième partie (13c) située immédiatement après la sortie (14) dans le sens de l'écoulement du second milieu et présentant une surface périphérique qui est située à une plus petite distance du passage en forme de fente (12) que le reste de la surface périphérique de la gorge (13).

10. Frein hydrodynamique selon une quelconque des revendications précédentes, **caractérisé en ce que** le second milieu est identique au premier milieu.
